# DEMANDE DE BREVET EUROPEEN

(11) **EP 2 354 879 A1**
(43) Date de publication de la demande: **10.08.2011**
(21) Numéro de dépôt: 11305055.3
(22) Date de dépôt: 19.01.2011
(51) Int. Cl.: G05D 7/06, E01C 19/10

(54) **Procédé de détermination du débit de bitume ou de liants hydrocarbonés à injecter dans une centrale d'enrobage continu**

(30) Priorité: 02.02.2010 FR 1050705
(71) Demandeur: Famaro, 42420 Lorette (FR)
(72) Inventeur: Marconnet, Guy André, 42800 Saint Martin La Plaine (FR); Riche, Hervé, 69540 Irigny (FR)
(74) Mandataire: Jacobson, Claude

(57) **Abrégé**

Le procédé consiste, dans une centrale d'enrobage (1) comprenant un tambour rotatif (12) de séchage et de chauffage des granulats, des moyens (14) de mélange et de malaxage des granulats avec le bitume ou les liants hydrocarbonés et une trémie tampon (20) anti-ségrégation des produits à la sortie des moyens de mélange et de malaxage, à peser pendant une phase de calibrage et pendant des régimes transitoires, le poids instantané des granulats déversés dans la trémie tampon (20), à calculer à partir dudit poids le débit de ces granulats au niveau de ladite trémie tampon (20), à déterminer et à enregistrer la courbe du débit des granulats pendant les régimes transitoires et à déterminer par homothétie des courbes du débit des granulats, les courbes de débit du bitume ou des liants hydrocarbonés pendant les régimes transitoires pour paramétrer le débit de ce bitume ou de ces liants à injecter en fonction du débit global des granulats circulant dans le tambour.

## Description

La présente invention concerne un procédé de détermination du débit de bitume ou de liants hydrocarbonés à injecter dans une centrale d'enrobage continu pour la préparation de produits enrobés bitumineux.

La fabrication de produits bitumineux, par exemple pour des revêtements routiers, à partir de granulats froids et humides, de bitume liquide ou de liants hydrocarbonés et de pulvérulents, est très souvent réalisée à chaud. Les granulats de départ sont tout d'abord séchés et chauffés avant d'être additionnés de bitume ou de liants hydrocarbonés, puis malaxés avec le bitume liquide qui assure l'enrobage des granulats. Des matériaux complémentaires, comme par exemple des matériaux pulvérulents et fillers ou des colorants peuvent être ajoutés au mélange dans la phase de malaxage, afin d'ajuster la teneur en matière fine granulométrique des produits enrobés.

Ces produits sont obtenus à partir d'une centrale d'enrobage continu qui comprend, entre autres, au moins un tambour rotatif de séchage et de chauffage des granulats et des moyens de mélange et de malaxage des granulats secs et chauds avec le bitume ou les liants hydrocarbonés. Les granulats froids et humides sont préalablement dosés dans des trémies généralement équipées d'extracteurs afin d'assurer la recomposition granulaire nécessaire à la formule du produit enrobé bitumineux à obtenir. Le transfert des granulats des trémies doseuses jusqu'au tambour rotatif est réalisé au moyen d'au moins un élément un d'élément de transport constitué par exemple par un transporteur à bande, équipé de moyens de pesage en continu. Après avoir été séchés et chauffés, les granulats sont mélangés au bitume ou aux liants hydrocarbonés et aux autres matériaux additionnels dans les moyens de mélange et de malaxage.

Selon le type de centrale d'enrobage, les moyens de mélange et de malaxage peuvent être incorporés dans le tambour rotatif lui-même comportant une zone d'extension contigüe prévue à cet effet, et le produit enrobé bitumineux sort directement du tambour rotatif prêt à l'emploi. Les moyens de mélange et de malaxage peuvent être constitués par un tambour rotatif séparé ou par un mélangeur à cuve du type mono ou bi-arbres disposé à la sortie du tambour sécheur.

Dans d'autres types de centrales d'enrobage, les moyens de mélange et de malaxage sont éloignés du tambour rotatif et ils sont généralement disposés en hauteur et le passage des produits enrobés bitumineux du tambour rotatif aux moyens de mélange et de malaxage séparés, s'effectue par des moyens de transport classiques, comme par exemple un transporteur à bande ou un transporteur à raclettes ou à godets ou par tout autre type de transporteur.

A la sortie des moyens de mélange et de malaxage incorporés ou non au tambour rotatif, le produit enrobé bitumineux ainsi obtenu, transite temporairement dans une trémie tampon de petite capacité dont le rôle est d'éviter la ségrégation des produits et cette trémie tampon à vidange cyclique assure la qualité de fabrication des produits en évitant sa ségrégation. Cette trémie tampon peut être immédiatement après les moyens de mélange et de malaxage ou déportée en hauteur et, dans ce cas, les produits enrobés bitumineux sont transférés jusqu'à ladite trémie tampon au moyen d'un élément de transport de type connu. Les produits enrobés bitumineux sont évacués cycliquement de la trémie tampon soit pour une utilisation finale, soit pour un stockage dans une ou plusieurs trémies de stockage.

Au cours de la fabrication des produits enrobés bitumineux, les débits de bitume ou des liants hydrocarbonés et d'autres matériaux complémentaires sont gérés en fonction du débit global des granulats entrant dans le tambour rotatif. Ce débit global des granulats peut être mesuré par exemple par une table de pesage située sur un convoyeur en amont du tambour ou en faisant la somme des débits individuels de chaque trémie de stockage. Un calculateur détermine le débit de bitume ou de liants hydrocarbonés correspondant à injecter dans les moyens de mélange et de malaxage en fonction du pourcentage de ce bitume ou de ces liants hydrocarbonés préalablement définis dans la formule des produits enrobés bitumineux à fabriquer.

Les matériaux additionnels tels que le bitume ou les liants hydrocarbonés sont injectés dans les moyens de mélange et de malaxage avec un retard déterminé qui correspond au temps que mettent les granulats en régime permanent pour aller des moyens de pesage jusqu'au point d'injection de ces matériaux additionnels. Dans le cas d'un débit global des granulats calculé avec la somme des doseurs des trémies de stockage, l'origine du temps de retard correspond au temps mis par les granulats pour aller du doseur le plus éloigné jusqu'au point d'injection des matériaux additionnels.

En régime permanent de fonctionnement de la centrale d'enrobage, cette méthode de détermination du débit de bitume ou de liants hydrocarbonés ou d'autres matériaux additionnels donne un dosage parfait.

Mais, en régime transitoire de fonctionnement de la centrale d'enrobage, c'est-à-dire qu'au cours des phases de démarrage et de remplissage du tambour et également au cours des phases d'arrêt et de vidange de ce tambour, cette méthode de gestion de l'injection des matériaux additionnels n'est pas applicable et il est nécessaire de disposer d'un autre mode de gestion.

En effet, en régime transitoire de démarrage et de remplissage du tambour rotatif, les granulats traversent ce tambour plus vite qu'en régime permanent et ils arrivent sous le point d'injection des matériaux additionnels avant le temps où leur débit passe de zéro au débit nominal et, de ce fait, pour avoir des produits enrobés bitumineux corrects, il est nécessaire d'injecter les matériaux additionnels progressivement avec une rampe de démarrage allant d'un débit nul jusqu'au débit nominal.

Jusqu'à présent, le débit de cette rampe de démarrage est réglé d'une manière empirique en fonction de l'aspect visuel des produits enrobés bitumineux qui sortent du tambour rotatif. Le débit de cette rampe est mémorisé dans un calculateur qui l'utilise à chaque démarrage.

En régime transitoire d'arrêt et de vidange du tambour, les granulats restent dans ce tambour plus longtemps qu'en régime permanent du fait du phénomène inverse de celui constaté lors de la phase de démarrage et de remplissage du tambour. Il est donc nécessaire de prolonger l'injection des matériaux additionnels avec une rampe d'arrêt dont le débit est réduit progressivement afin d'avoir des produits enrobés bitumineux de qualité acceptable.

Jusqu'à présent, le débit de cette rampe d'arrêt est réglé de manière empirique en fonction de l'aspect visuel des produits enrobés bitumineux qui sortent du tambour rotatif. Le débit de cette rampe est également mémorisé dans le calculateur qui l'utilise à chaque arrêt.

De plus, les régimes transitoires dépendent également de la dimension maximale des granulats utilisés dans les produits enrobés bitumineux. Généralement, on trouve communément cinq gammes de granulats.

En conséquence, du fait des différentes gammes de granulats utilisés pour la production de produits enrobés bitumineux, il est nécessaire de paramétrer autant de rampes d'injection de démarrage que de gammes de granulats et aussi autant de rampes d'injection d'arrêt que de gammes de granulats.

La multiplication de ces rampes de démarrage et d'arrêt rend la gestion de ces régimes transitoires complexe et multiplie les risques d'obtention de produits enrobés bitumineux qui ne sont pas conformes à la qualité recherchée pendant ces régimes transitoires.

L'invention a pour but de proposer un procédé de détermination du débit de bitume ou de liants hydrocarbonés et d'une manière générale de matériaux additionnels à mélanger avec les granulats, qui évite ces inconvénients et qui est simple à mettre en oeuvre.

L'invention a donc pour objet un procédé de détermination du débit de bitume ou de liants hydrocarbonés à injecter dans une centrale d'enrobage continu pour la préparation de produits enrobés bitumineux à partir de granulats froids et humides, ladite centrale comprenant un tambour rotatif de séchage et de chauffage des granulats, des moyens de mélange et de malaxage des granulats secs et chauds avec le bitume ou les liants hydrocarbonés et une trémie tampon anti-ségrégation des matériaux à la sortie des moyens de mélange et de malaxage, caractérisé en ce qu'au cours d'une opération de calibrage de la centrale d'enrobage et pendant des régimes transitoires de démarrage et de remplissage du tambour et d'arrêt et de vidange dudit tambour :
- on pèse en continu le poids instantané des granulats déversés dans la trémie tampon,
- on calcule à partir dudit poids instantané le débit de ces granulats au niveau de ladite trémie tampon,
- on détermine et on enregistre les courbes du débit des granulats enregistrés les régimes transitoires, et
- on détermine par homothétie des courbes du débit des granulats enregistrés, les courbes de débit du bitume ou des liants hydrocarbonés pendant les régimes transitoires pour paramétrer le débit de ce bitume ou de ces liants à injecter dans les moyens de mélange et de malaxage en fonction du débit global des granulats circulant dans le tambour.

Selon d'autres caractéristiques de l'invention :
- on calcule le débit Q3 des granulats par la formule Q3 = dP/dt et on détermine la courbe de ce débit par le formule Q3(t)=f(dP/dt),
- on renouvèle l'opération de calibrage pour déterminer le débit du bitume ou des liants hydrocarbonés pour chaque gamme de granulats,
- le coefficient d'homothétie est fonction du pourcentage du bitume ou des liants hydrocarbonés contenus dans la formule du produit enrobé bitumineux à fabriquer,
- on détermine par homothétie des courbes du débit des granulats, les courbes des matériaux complémentaires à ajouter pendant les régimes transitoires pour paramétrer le débit de ces matériaux complémentaires à injecter dans les moyens de mélange et de malaxage en fonction du débit global des granulats circulant dans le tambour,
- le coefficient d'homothétie est fonction du pourcentage de matériaux complémentaires contenus dans la formule des produits enrobés bitumineux à fabriquer, et
- les moyens de mélange et de malaxage sont incorporés dans le tambour.

L'invention sera mieux comprise à la lecture de la description qui va suivre, donnée à titre d'exemple et faite en référence aux dessins annexés, sur lesquels :
- les figures 1 à 3 sont des vues schématiques en élévation de plusieurs exemples de centrales d'enrobage pour la préparation en continu de produits enrobés bitumineux,
- la figure 4 représente la courbe de débit des granulats en fonction du temps au niveau des moyens de pesage pendant un cycle de fonctionnement de la centrale d'enrobage,
- la figure 5 représente la courbe de débit des granulats en fonction du temps au niveau du point d'injection du bitume ou des liants hydrocarbonés pendant un cycle de fonctionnement de la centrale d'enrobage,
- la figure 6 représente la courbe de débit des granulats en fonction du temps au niveau de la sortie du tambour de la centrale d'enrobage pendant un cycle de fonctionnement de cette centrale d'enrobage,
- la figure 7 représente la courbe de débit des granulats en fonction du temps au niveau de la trémie tampon anti-ségrégation de la centrale d'enrobage pendant un cycle de fonctionnement de cette centrale d'enrobage, et
- la figure 8 représente la courbe de débit du bitume ou des liants hydrocarbonés au niveau des moyens d'injection pendant un cycle de fonctionnement de la centrale d'enrobage.

D'une manière générale, le procédé selon l'invention permet de déterminer le débit de bitume ou de liants hydrocarbonés ou de matériaux complémentaires, comme par exemple des pulvérulents, des fillers ou du sable, à injecter dans une centrale d'enrobage continu pour la préparation de produits enrobés bitumineux à partir de granulats froids et humides.

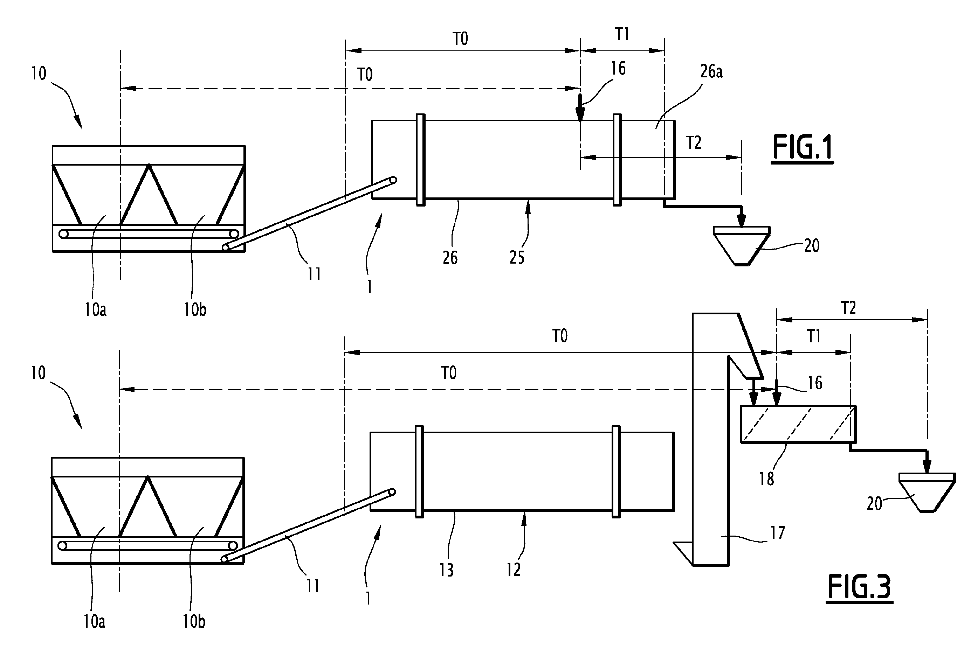

Le procédé selon l'invention s'applique à tous les types de centrales d'enrobage continu, ainsi que représentés titre d'exemple sur les figures 1 à 3.

Comme montré sur ces figures, les centrales d'enrobage continu désignées par la référence générale 1 comprennent, de manière classique, une unité de stockage 10 des granulats froids et humides se composant de plusieurs trémies 10a et 10b dans lesquelles les granulats vierges sont placés en fonction de leur granulométrie et/ou de leur composition.

Ces granulats peuvent être classés depuis les matériaux à fine granulométrie tels que les pulvérulents ou le sable jusqu'à des matériaux à forte granulométrie tels que des cailloux. Communément, pour la fabrication de produits enrobés bitumineux, les granulats sont classés selon cinq gammes.

La centrale d'enrobage 1 comporte un élément de transport 11 disposé au-dessous des trémies de l'unité de stockage 10 de façon à transporter les granulats froids et humides déversés par les trémies de ladite unité de stockage 10 jusqu'à une entrée d'au moins un tambour rotatif pour sécher et chauffer les granulats.

Selon un premier mode de réalisation représenté à la figure 1, la centrale d'enrobage 1 comporte un tambour 25 de type connu qui, dans ce cas, est formé par un tambour sécheur-malaxeur, de type connu. Ce tambour 25 comporte une enveloppe 26 de forme générale cylindrique, montée rotative et également un brûleur, non représenté, comportant un corps de forme allongée débouchant dans l'enveloppe 26. Le tambour 25 est également équipé de moyens 16 d'injection de bitume ou de liants hydrocarbonés constitués par une rampe d'injection. Les granulats froids et humides sont transportés par l'élément de transport jusqu'à une extrémité d'entrée du tambour 25 destiné à les sécher et à les chauffer.

Afin d'assurer le mélange des granulats secs et chauds avec le bitume ou les liants hydrocarbonés, l'enveloppe 26 du tambour 25 comporte une zone d'extension 26a contigüe prévue à cet effet. Les produits enrobés bitumineux sortent du tambour 25 prêts à l'emploi et sont déversés dans la trémie tampon 20 anti-ségrégation.

Cette trémie tampon 20 peut être également déportée en hauteur et le transfert des produits enrobés bitumineux du tambour 25 jusqu'à la trémie tampon 20 est assuré par un élément de transport, comme par exemple un convoyeur à raclettes ou à godets ou tout autre élément approprié.

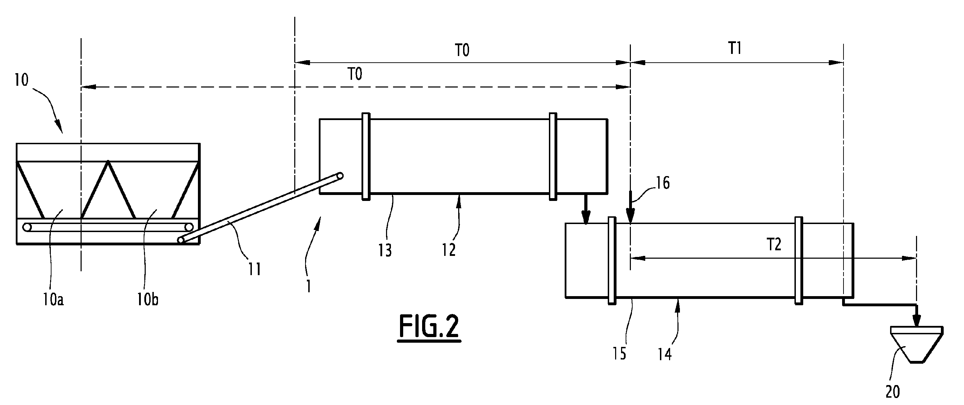

Selon un deuxième exemple représenté à la figure 2, les granulats froids et humides sont transportés par l'élément de transport 11 jusqu'à une extrémité d'entrée d'un premier tambour sécheur 12, de type connu, destiné à sécher et à chauffer les granulats. Ce premier tambour sécheur 12 comporte une enveloppe 13 de forme générale cylindrique montée rotative et un brûleur, non représenté, comportant un corps de forme allongée débouchant dans l'enveloppe 13. A la sortie du tambour sécheur 12, les granulats secs et chauds sont déversés à l'entrée d'un second tambour malaxeur 14 de type connu. Ce second tambour malaxeur comporte aussi une enveloppe 15 de forme générale cylindrique montée rotative et un brûleur, non représenté, comportant un corps de forme allongée débouchant dans l'enveloppe 15.

Le second tambour malaxeur 14 comporte aussi des moyens de mélange et de malaxage des granulats secs et chauds avec du bitume ou des liants hydrocarbonés injectés dans le second tambour sécheur malaxeur par des moyens d'injection 16, comme par exemple une rampe d'injection de ce bitume ou de ces liants hydrocarbonés.

Dans l'exemple de réalisation représenté à la figure 2, les moyens de mélange et de malaxage sont incorporés dans le second tambour malaxeur 14 et sont formés par une zone de l'enveloppe 15 de ce second tambour sécheur-malaxeur 14.

A la sortie du second tambour malaxeur 14, le produit enrobé bitumineux final ainsi obtenu est déversé dans une trémie tampon anti-ségrégation 20, de type connu. Cette trémie tampon 20 assure la qualité de fabrication du produit enrobé bitumineux en évitant la ségrégation de ce produit et elle permet d'évacuer cycliquement le produit enrobé bitumineux, soit pour une utilisation finale, soit pour un stockage dans une ou plusieurs trémies de stockage.

Selon une variante, non représentée, la trémie tampon 20 peut être déportée en hauteur par rapport à la sortie du second tambour sécheur-malaxeur 14 et, dans ce cas, le produit enrobé bitumineux est transféré dans cette trémie tampon 20 par un élément de transport, non représenté, comme par exemple un convoyeur à raclettes ou à godets ou un convoyeur à bande.

Selon un troisième exemple de réalisation représenté à la figure 3, sur lequel les éléments communs au premier mode de réalisation sont désignés par les mêmes références, les granulats secs et chauds à la sortie du premier tambour sécheur 12 sont transférés par un élément de transport 17, comme par exemple un élévateur à godets, dans une cuve 18 d'un mélangeur-malaxeur du type mono ou bi-arbres, situé à un niveau supérieur par rapport au premier tambour sécheur 12. La cuve 18 du mélangeur malaxeur est équipée de moyens 16 d'injection du bitume ou des liants hydrocarbonés constitués par exemple par une rampe d'injection. La trémie tampon 20 anti-ségrégation est située à la sortie de la cuve 18 du mélangeur-malaxeur.

Un calculateur de type connu, non représenté, gère l'ensemble des débits de chaque matériau complémentaire à injecter dans le tambour 14 ou 25 ou dans la cuve 18 de mélange et de malaxage et notamment le débit du bitume ou des liants hydrocarbonés en fonction du débit global des granulats entrant dans le tambour 12 ou 25. Ce débit global est soit mesuré par une table de pesage, non représentée, située sur le convoyeur 11 en amont du tambour, soit calculé en faisant la somme des débits individuels de chaque trémie 10a et 10b de l'unité de stockage 10.

Le calculateur détermine le débit de bitume ou de liants hydrocarbonés à injecter dans le tambour 14 ou 25 ou dans la cuve 18 en fonction du pourcentage de bitume ou de liants hydrocarbonés défini dans la formule du produit enrobé bitumineux à fabriquer.

Le bitume ou les liants hydrocarbonés sont injectés par les moyens 16 d'injection avec un retard TO qui correspond au temps que mettent les granulats en régime permanent pour aller de la table de pesage au point d'injection des moyens 16 d'injection.

Dans le cas du débit global des granulats calculé avec la somme des débits des granulats déversés par les trémies 10a, 10b de l'unité de stockage 10, l'origine du temps de retard TO correspond au temps mis par les granulats pour aller du doseur de la trémie la plus éloignée au point d'injection des moyens 16 d'injection du bitume ou des liants hydrocarbonés.

Cette méthode donne un dosage parfait du bitume ou des liants hydrocarbonés en régime permanent de fonctionnement de la centrale d'enrobage 1.

En régime transitoire de démarrage, les granulats traversent le ou les tambours plus vite qu'en régime permanent et en régime transitoire d'arrêt, les granulats restent dans le ou les tambours plus longtemps qu'en régime permanent.

Le procédé selon l'invention permet de déterminer le débit de bitume ou de liants hydrocarbonés ainsi que pour d'autres matériaux complémentaires à injecter dans la centrale d'enrobage 1 continu pour la préparation de produits enrobés bitumineux pendant les régimes transitoires de démarrage et de remplissage du ou des tambours et d'arrêt et de vidange de ce ou ces tambours.

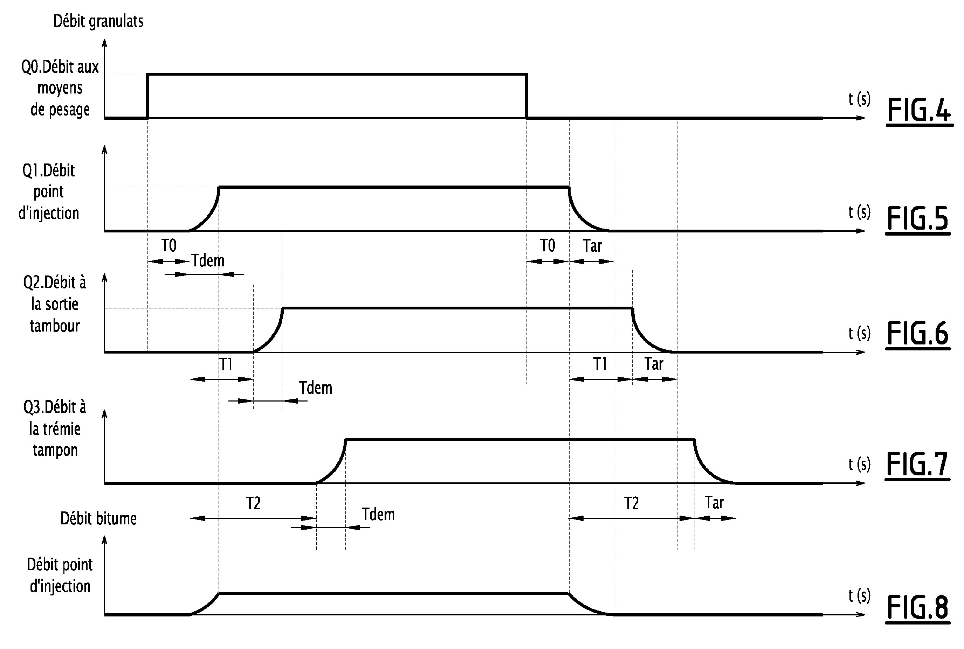

Sur la figure 4, on a représenté la courbe du débit Q0 des granulats en fonction du temps au niveau des moyens de pesage en amont du tambour 12 ou 25 pour le régime permanent et pour les régimes transitoires, d'une part, de démarrage et de remplissage de ce tambour et, d'autre part, d'arrêt et de vidange dudit tambour. Le débit Q0 est tout d'abord nul et il passe au débit optimal, puis de ce débit optimal à un débit zéro.

Sur les figures 5 à 7, on a représenté pour un tambour secheur-melangeur 25 les courbes des débits en granulats en fonction du temps pour le régime permanent et pour les régimes transitoires, c'est-à-dire de démarrage et de remplissage et d'arrêt et de vidange, respectivement :
- figure 5 : la courbe du débit Q1 en fonction du temps au niveau du point d'injection des moyens 16 d'injection,
- figure 6 : le débit Q2 en fonction du temps à la sortie du tambour 14 ou 25.
- figure 7 : le débit Q3 en fonction du temps au niveau de la trémie tampon 20.

En régime permanent, les granulats entrant dans le tambour avec un débit Q0 mettent un temps T0 pour aller de moyens de pesage jusqu'aux moyens 16 d'injection du bitume ou des liants hydrocarbonés (figure 5), un temps T1 pour aller du point d'injection des moyens 16 d'injection jusqu'à la sortie du tambour (figure 6) et un temps T2 pour aller du point d'injection des moyens 16 d'injection jusqu'à la trémie tampon 20 (figure 7).

Sur les figures 5 à 7, Tdem représente le temps de démarrage en régime transitoire de démarrage et de remplissage et Tar représente le temps d'arrêt en régime transitoire d'arrêt et de vidange.

Ainsi que montré à la figure 8, le débit de bitume ou de liants hydrocarbonés au point d'injection passe progressivement d'un débit nul à un débit optimal pendant la phase de démarrage, puis de ce débit optimal à un débit zéro pendant la phase de vidange.

La trémie tampon 20 de la centrale d'enrobage 1 est équipée de moyens de pesage, non représentés, de type connu afin de mesurer instantanément le poids P des matériaux qu'elle contient.

Le procédé selon l'invention consiste à déterminer le débit de bitume ou de liants hydrocarbonés à injecter pendant les régimes transitoires de démarrage et de remplissage de la centrale et d'arrêt et de vidange de cette centrale de façon à obtenir un produit enrobé bitumineux de bonne qualité même pendant les régimes transitoires.

Pour cela, au cours d'une opération de calibrage de la centrale d'enrobage 1 et pendant ces régimes transitoires, on pèse en continu le poids P instantané des granulats déversés dans la trémie tampon 20.

Pour mesurer le débit des granulats Q1 au point d'injection des moyens 16 d'injection du bitume ou des liants hydrocarbonés, on calcule à partir du poids P instantané le débit Q3 de ces granulats au niveau de la trémie tampon 20, qui en est l'image déphasée de la durée du temps de parcours T1 entre les deux points.

Le calcul du débit Q3 des granulats est obtenu en appliquant la formule Q₃ = dP/dt.

Ensuite, on détermine et on enregistre les courbes Q3(t) du débit des granulats pour chacun de ces régimes transitoires en appliquant la formule Q3(t) = f(dP/dt).

Ensuite, on détermine par homothétie de ces courbes du débit des granulats, les courbes de débit du bitume ou des liants hydrocarbonés pendant les régimes transitoires pour paramétrer le débit de ce bitume ou de ces liants hydrocarbonés à injecter par les moyens 16 d'injection en fonction du débit global des granulats circulant dans le tambour 12 ou 25.

Ces différentes mesures sont renouvelées en effectuant à chaque fois une opération de calibrage pour déterminer le débit du bitume ou des liants hydrocarbonés pour chaque gamme de granulats entrant dans la composition des différents produits enrobés bitumineux.

Par conséquent, les courbes de débit des granulats ainsi mesurées sont stockées dans une unité de programmation ou un calculateur et elles servent de référence dans les régimes transitoires pour établir les courbes de débit du bitume ou des liants hydrocarbonés, ces débits étant tous proportionnels aux débits des granulats Q0 circulant dans le tambour.

On détermine également par homothétie des courbes du débit des granulats précédemment enregistrées, les courbes des matériaux complémentaires, comme par exemple les fillers ou le sable, à ajouter pendant les régimes transitoires pour paramétrer le débit de ces matériaux complémentaires à ajouter en fonction du débit global des granulats circulant dans le tambour 12 ou 25.

Ce coefficient d'homothétie est fonction du pourcentage du bitume ou des liants hydrocarbonés ou des matériaux complémentaires contenus dans la formule du produit enrobé bitumineux à obtenir à la sortie de la centrale d'enrobage 1.

Ainsi, les courbes de débit du bitume ou des liants hydrocarbonés et des matériaux complémentaires en fonction du débit granulats et également en fonction de la gamme de granulats entrant dans la composition du produit enrobé bitumineux à fabriquer, sont utilisées lors de chaque régime transitoire.

Le procédé selon l'invention s'applique à toutes les centrales d'enrobage pour la production de produits enrobés bitumineux à partir de granulats secs et chauds et comportant un tambour sécheur rotatif, un ensemble de mélange et de malaxage intégré ou non au tambour sécheur et une trémie tampon anti-ségrégation.

## Revendications

1. Procédé de détermination du débit de bitume ou de liants hydrocarbonés à injecter dans une centrale (1) d'enrobage continu pour la préparation de produits enrobés bitumineux à partir de granulats froids et humides, ladite centrale (1) comprenant un tambour rotatif (12, 25) de séchage et de chauffage des granulats, des moyens (14, 18, 26a) de mélange et de malaxage des granulats secs et humides avec le bitume ou les liants hydrocarbonés et une trémie tampon (20) anti-ségrégation des produits à la sortie des moyens (14, 18, 26a) de mélange et de malaxage, **caractérisé en ce qu'**au cours d'une opération de calibrage de la centrale (1) d'enrobage et pendant des régimes transitoires de démarrage et de remplissage du tambour (12, 25) et d'arrêt et de vidange dudit tambour (12, 25) :
- on pèse en continu le poids P instantané des granulats déversés dans la trémie tampon (20),
- on calcule à partir dudit poids instantané le débit Q3 de ces granulats au niveau de ladite trémie tampon (20),
- on détermine et on enregistre les courbes Q3(t) du débit des granulats, pendant les régimes transitoires,
- on détermine par homothétie des courbes du débit Q3 des granulats, les courbes de débit du bitume ou des liants hydrocarbonés pendant les régimes transitoires pour paramétrer les débits de ce bitume et de ces liants à injecter en fonction du débit global des granulats circulant dans le tambour (12, 25).

2. Procédé selon la revendication 1, **caractérisé en ce que** l'on calcule le débit Q3 des granulats par la formule Q3 = dP/dt et on détermine la courbe Q3(t) de ce débit par la formule Q3(t) = f (dP/dt).

3. Procédé selon la revendication 1 ou 2, **caractérisé en ce que** l'on renouvèle l'opération de calibrage pour déterminer le débit du bitume ou des liants hydrocarbonés pour chaque gamme de granulats.

4. Procédé selon l'une quelconque des revendications 1 à 3, **caractérisé en ce que** le coefficient d'homothétie est fonction du pourcentage du bitume ou des liants contenus dans la formule du produit enrobé bitumineux à fabriquer.

5. Procédé selon l'une quelconque des revendications 1 à 4, **caractérisé en ce que** l'on détermine par homothétie des courbes du débit des granulats, les courbes des matériaux complémentaires à ajouter pendant les régimes transitoires pour paramétrer le débit de ces matériaux complémentaires à ajouter en fonction du débit global des granulats circulant dans le tambour (12, 25).

6. Procédé selon la revendication 5, **caractérisé en ce que** le coefficient d'homothétie est fonction du pourcentage de matériaux complémentaires contenus dans la formule du produit enrobé bitumineux à fabriquer.

7. Procédé selon l'une quelconque des revendications précédentes, **caractérisé en ce que** les moyens (26a) de mélange et de malaxage sont incorporés dans le tambour (25).
